(19) Europäisches Patentamt
European Patent Office
Office européen des brevets

(11) Publication number: **0 112 927**
**B1**

# (12) EUROPEAN PATENT SPECIFICATION

(45) Date of publication of patent specification: **11.02.87**

(51) Int. Cl.[4]: **C 08 F 218/16,** G 02 B 1/04

(21) Application number: **83902131.8**

(22) Date of filing: **07.07.83**

(86) International application number:
**PCT/JP83/00217**

(87) International publication number:
**WO 84/00370 02.02.84 Gazette 84/03**

## (54) RESIN FOR LENS WITH HIGH REFRACTIVE INDEX AND LENS COMPOSED OF IT.

(30) Priority: **08.07.82 JP 117821/82**
**25.11.82 JP 205451/82**

(43) Date of publication of application:
**11.07.84 Bulletin 84/28**

(45) Publication of the grant of the patent:
**11.02.87 Bulletin 87/07**

(84) Designated Contracting States:
**FR**

(56) References cited:
**JP-A-56 145 910**
**JP-A-57 099 601**

(73) Proprietor: **MITSUI TOATSU CHEMICALS, INCORPORATED**
**2-5 Kasumigaseki 3-chome**
**Chiyoda-Ku Tokyo 100 (JP)**

(72) Inventor: **SASAGAWA, Katsuyoshi**
**1510, Shinyoshidacho Kouhoku-ku**
**Yokohama-shi Kanagawa 223 (JP)**
Inventor: **HYUGAJI, Teruo**
**1230-56, Kamigoucho Totsuka-ku**
**Yokohama-shi Kanagawa 247 (JP)**
Inventor: **IMAI, Masao**
**1-11-10, Hashido Seya-ku**
**Yokohama-shi Kanagawa 246 (JP)**
Inventor: **KANNO, Kimio**
**2070, Iijimacho Totsuka-ku**
**Yokohama-shi Kanagawa 244 (JP)**

(74) Representative: **Lecca, Jean et al**
**CABINET PLASSERAUD 84, rue d'Amsterdam**
**F-75009 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 112 927 B1**

## Description

Technical Field

This invention relates to a lens-making resin having a high refractive index and a lens made of the above resin.

Backgrōund Art

Plastic lenses have found increasing commercial utility as eyeglass lenses, camera lenses and other optical lenses in recent years, since they are lighter in weight, less fragile and more readily colored in comparison with inorganic glass lenses. As a resin which is currently used in a large volume for the above application, there is a resin obtained by the casting-polymerization of diethylene glycol bisallylcarbonate (hereinafter called "CR—39"). However, the refractive index ($n_d$) of the above resin is 1.50, which is smaller compared with those of inorganic glass lenses ($n_d$ = about 1.52). In order to achieve the same optical characteristics as glass lenses, it is necessary to increase the central thickness, peripheral thickness and curvature of each plastic lens, thereby unavoidably making the plastic lens thicker as a whole. For this reason, there is an outstanding desire for the development of a lens-making resin having a still higher refractive index. As resins having high refractive indexes, there have already been known poycarbonate ($n_d$ = 1.58—1.59), polystyrene ($n_d$ = 1.58—1.60), etc. These resins are each a two-dimensional polymer structurally and thermoplastic. They are thus unsuitable for casting-polymerization method which is suitable for production of articles in various models such as fabrication of eyeglass lenses, and their post-molding processings, especially their rough-grinding and smoothing (hereinafter merely referred to as "grinding") work is difficult. Therefore, use of these resins are presently limited to some sort of safety eyeglasses and the like.

Accordingly, there is a strong desire for the development of a lens-making resin which has a refractive index higher than that of the lens-making resin prepared by polymerizing CR—39, can be cast-polymerized similar to CR—39 and does not make diamond-made grindstones loaded owing to its three-dimensional crosslinking structure when grinding molded lens blanks. A variety of researches has already been carried out with a view toward developing a resin which would meet the above-mentioned desire, resulting in proposals of resins obtained by copolymerizing CR—39 and second monomers having refractive indexes higher than that of CR—39 when measured as their respective homopolymers (see, Japanese Patent Laid-open Nos. 79353/1976, 7787/1978, 77686/1979, 15118/1980 and 36601/1981). The refractive indexes of the thus-copolymerized resins are however inherently limited because they employ CR—39 as their principal components. It was thus difficult to obtain a resin having a high refractive index, for example, a refractive index of 1.55 or higher.

In order to obtain a resin having a still higher refractive index, it is urged to use a bifunctional monomer which can afford a homopolymer having a refractive index higher than that of CR—39. However, each of bifunctional monomers which have been proposed to date resulted in a polymer having impact resistance much poorer compared with the homopolymer of CR—39 when polymerized singly. Thus, some attempts have been made to improve the impact resistance of these bifunctional monomers by copolymerizing them with a unifunctional monomer. Here, each matching unifunctional monomer is required to have a high refractive index when measured as its homopolymer if one wants to obtain a copolymer having a high refractive index. For this reason, styrene or a halogen-substituted styrene is presently used as such a unifunctional monomer. However, use of bifunctional monomers different from CR—39, which have heretofore been proposed, in combination with the above-mentioned unifunctional monomers is accompanied by such drawbacks that it tends to result in development of polymerization strain and is difficult to obtain polymers having uniform refractivity distribution because there are considerable differences in polymerization reactivity between such bifunctional monomers and unifunctional monomers and the proportions of the bifunctional monomers and unifunctional monomers cannot be varied freely due to poor miscibility therebetween.

With the foregoing in view, the present inventors carried out an extensive research with a view toward making improvements to the above-described drawbacks. As a result, it has been found that a resin, which has a high refractive index and excellent processability such as grinding processability and superb impact resistance, exhibits excellent miscibility between its starting unifunctional monomer and bifunctional monomer upon copolymerization thereof, is less susceptible of developing polymerization strain and is thus suitable for use in the production of high-refractivity lenses, can be obtained by copolymerizing a specific bifunctional monomer and a unifunctional monomer having a refractive index of at least 1.55 as a homopolymer, capable of undergoing a radical polymerization and containing an aromatic ring, leading to completion of this invention.

Disclosure of the Invention

This invention therefore provides a resin for high-refractivity lenses, formed by copolymerizing by heating, in the presence of a radical polymerization initiator and optionally of one or more appropriate usual additives such as ultraviolet stabilizer, antioxidant, coloring inhibitor or fluoroescent dye, a mixture of 10—80 wt.% of at least one nucleus-halogenated benzene dicarboxylate represented by the following general formula (I):

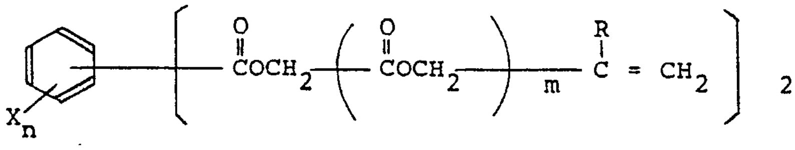 (I)

wherein X means a chlorine or bromine atom, *n* is 2 or 4, *m* stands for 0 or 1 and R denotes a hydrogen atom or a methyl group and 20—90 wt.% of at least one unifunctional monomer having a refractive index of at least 1.55 as a homopolymer, capable of undergoing a radical polymerization and represented by the following general formula (III):

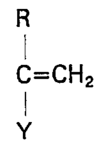 (III)

wherein R means a hydrogen atom or a methyl group and Y denotes

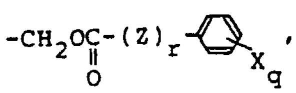 , 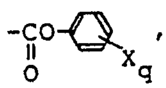 , 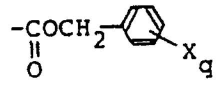 or 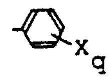

in which X means a chlorine or bromine atom, Z is an oxygen or sulfur atom, *q* stands for an integer of 0—5, and *r* stands for 0 or 1.

This invention also provides lenses made of such a resin.

Best Mode for Carrying Out the Invention

The first monomer of this invention, namely, the nucleus-halogenated benzene dicarboxylate represented by the general formula (I) may be prepared by the esterification reaction between the acid chloride of its corresponding nucleus-halogenated benzenedicarboxylic acid and allyl alcohol or β-methylallyl alcohol or by the esterification reaction beteen the corresponding nucleus-halogenated benzenedicarboxylic acid and allyl chloroacetate or β-methylally chloroacetate in the presence of triethylamine or the like. As specific examples of the nucleus-halogenated benzene dicarboxylate represented by the general formula (I), may be mentioned:

Bisallyl 2,4-dichloroterephthalate;
Bis(β-methylallyl) 2,4-dichloroterephthalate;
Bis(allyloxycarbonylmethyl) 2,4-dichloroterephthalate;
Bis(β-methylallyloxycarbonylmethyl) 2,4-dichloroterephthalate;
Bisallyl 2,4-dibromoterephthalate;
Bis(β-methylallyl) 2,4-dibromoterephthalate;
Bis(allyloxycarbonylmethyl) 2,4-dibromoterephthalate;
Bis(β-methylallyloxycarbonylmethyl) 2,4-dibromoterephthalate;
Bisallyl tetrachloroterephthalate;
Bis(β-methylallyl) tetrachloroterephthalate;
Bis(allyloxycarbonylmethyl) tetrachloroterephthalate;
Bis(β-methylallyloxycarbonylmethyl) tetrachloroterephthalate;
Bisallyl tetrabromoterphthalate;
Bis(β-methylallyl) tetrabromoterephthalate;
Bis(allyloxycarbonylmethyl) tetrabromoterephthalate;
Bis(β-methylallyloxycarbonylmethyl) tetrabromoterephthalate;
Bisallyl tetrachlorophthalate;
Bis(β-methylallyl) tetrachlorophthalate;
Bis(allyloxycarbonylmethyl)tetrachlorophthalate;
Bis(β-methylallyloxycarbonylmethyl)tetrachlorophthalate;
Bisallyl tetrabromophthalate;
Bis(β-methylallyl) tetrabromophthalate;
Bis(allyloxycarbonylmethyl) tetrabromophthalate; and
Bis(β-methylallyloxycarbonylmethyl) tetrabromoterephthalate;

Among the above-mentioned esters represented by the general formula (I), those represented by the following general formula (II):

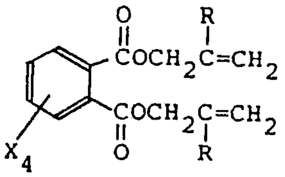

(II)

wherein X means a chlorine or bromine atom and R denotes a hydrogen atom or a methyl group are particularly preferred in view of the refractive indexes of resulting resins and their miscibility with unifunctional monomers upon their copolymerization. As specific examples of these preferred esters, may be mentioned bisallyl tetrachlorophthalate, bis(β-methylallyl) tetrachlorophthalate, bisallyl tetrabromophthalate and bis(β-methylallyl) tetrabromophthalate.

The ester represented by the general formula (I) is subjected to copolymerization in the present invention, using as a second monomer a unifunctional monomer having a refractive index of at least 1.55 as a homopolymer, capable of undergoing a radical polymerization and represented by the following general formula (III):

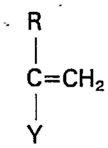

(III)

wherein R means a hydrogen atom or a methyl group and Y denotes

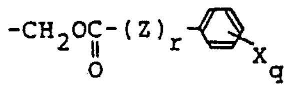 , 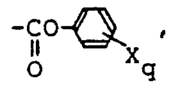 , 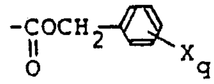 or 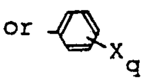

in which X means a chlorine or bromine atom, Z is an oxygen or sulfur atom, *q* stands for an integer of 0—5 and *r* is 0 or 1. As representative specific examples of such monomers, may be mentioned:

Allyl or β-methylallyl esters of nucleus-halogenated benzoic acids:

For example, allyl or β-methylallyl 2-chlorobenzoate, 3-chlorobenzoate, 4-chlorobenzoate, 2,4-dichlorobenzoate, 2,5-dichlorobenzoate, 2,6-dichlorobenzoate, 3,4-dichlorobenzoate, 3,5-dichlorobenzoate, 2,3,6-trichlorobenzoate, pentachlorobenzoate, 2-bromobenzoate, and 3-bromobenzoate.

Allyl or β-methylallyl carbonates of nucleus-halogenated phenols:

For example, the allyl or β-methylallyl carbonates of 2-chlorophenol, 3-chlorophenol, 4-chlorophenol, 2,3-dichlorophenol, 2,4-dichlorophenol, 2,5-dichlorophenol, 2,6-dichlorophenol, 3,4-dichlorophenol, 3,5-dichlorophenol, 2,4,5-trichlorophenol, 2,4,6-trichlorophenol, 2,3,4,6-tetrachlorophenol, pentachlorophenol, 2-bromophenol, 3-bromophenol, 4-bromophenol, 2,4-dibromophenol, 2,4,6-tribromophenol, and pentabromophenol.

Allyl or β-methylallyl carbonates of nucleus-halogenated thiophenols:

For example, the allyl or β-methylallyl carbonates of 2,3-dichlorothiophenol, 2,5-dichlorothiophenol, 3,5-dichlorothiophenol, 2,3,6-trichlorothiophenol, 2,4,5-trichlorothiophenol, 2,3,5,6-tetrachlorothiophenol, pentachlorothiophenol, 2-bromothiophenol, 2,4-dibromothiophenol, and 2,4,6-tribromothiophenol.

Acrylates or Methacrylates containing aromatic rings:

For example, phenyl acrylate, phenyl methacrylate, nucleus-chlorinated phenyl acrylates, nucleus-chlorinated phenyl methacrylates, nucleus-brominated phenyl acrylates, nucleus-brominated phenyl methacrylates, benzyl acrylate, benzyl methacrylate, nucleus-chlorinated benzyl acrylates, nucleus-chlorinated benzyl methacrylates, nucleus-brominated benzyl acrylates and nucleus-brominated benzyl methacrylates. As other specific examples, there are styrene and nucleus-halogenated styrene, for example, nucleus-chlorinated styrenes and nucleus-brominated styrenes.

It is especially preferred to use, as unifunctional monomers having particularly good miscibility with the bifunctional monomers represented by the general formula (I), those represented by the following general formula (IV):

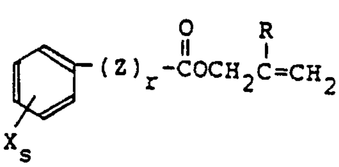

(IV)

wherein R means a hydrogen atom or a methyl group, X denotes a chlorine or bromine atom, Z is an oxygen or sulfur atom, *r* stands for 0 or 1 and *s* is an integer of 1—5, namely, the allyl or β-methylallyl esters of nucleus-halogenated benzoic acids, or the allyl or β-methylallyl carbonates of nucleus-halogenated phenols or thiophenols, out of the above-described unifunctional monomers.

Resins according to this invention, which are obtained by reacting bifunctional monomers represented by the general formula (I) and unifunctional monomers represented by the general formula (III) respectively, contain the following structural units represented by the following general formulae (V) and (VI):

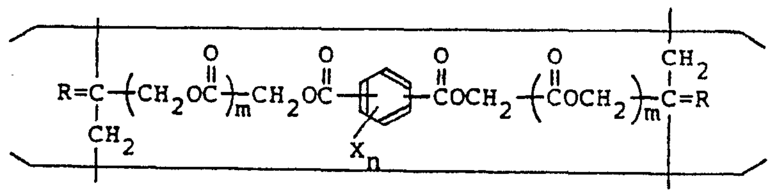

(V)

wherein X means a chlorine or bromine atom, *n* stands for 2 or 4, *m* is 0 or 1 and R denotes a hydrogen atom or a methyl group; and

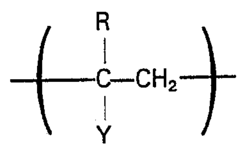

(VI)

wherein R means a hydrogen atom or methyl group and Y denotes

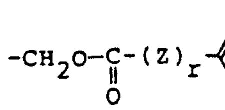 , 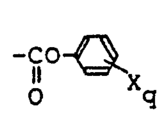 , 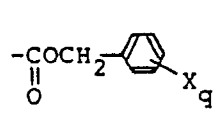 or 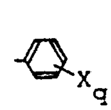

in which X means a chlorine or bromine atom, Z is an oxygen or sulfur atom, *q* stands for an integer of 0—5 and *r* is 0 or 1.

In the present innvention, the proportion of each ester represented by the general formula (I) cannot be limited to any specific value or range because its preferred proportion may vary depending on the type of the ester. However, the ester of the general formula (I) may be used at a proportion of 10—80 wt.% or, preferably 10—70 wt.%. If the ester is incorporated at any proportion lower than 10 wt.%, the resultant, copolymerized resin will have an extremely low surface hardness. Any proportions in excess of 80 wt.% are not suitable because the impact resistance will be lowered. Accordingly, one or more of the above-described second monomers are copolymerized with the ester represented by the general formula (I), at a total proportion of 20—90 wt.%.

Furthermore, no particular limitation is vested on the type of a radical polymerization initiator which is to be used upon conducting a copolymerization so as to obtain a lens-making resin according to this invention. It is thus preferable to use, at a proportion of 0.01—5 wt.%, a conventional peroxide such as benzoyl peroxide, p-chlorobenzoyl peroxide, diisopropyl peroxycarbonate, di-2-ethylhexyl peroxycarbonate or tertiary butyl peroxypivalate or a known azo compound such as azobisisobutyronitrile.

The lens-making resin according to this invention can be prepared by subjecting a mixture of at least one ester represented by the general formula (I), at least one of the above-described second monomer and a radical polymerization initiator to the known casting-polymerization method, in other words, pouring the mixture into a mold formed of a gasket or spacer and a glass-made or metallic mold and polymerizing and hardening the mixture by heating it at temperatures in the range of 50—120°C. Here, it may be possible to incorporate one or more usual additives such as ultraviolet stabilizer, antioxidant, coloring inhibitor and/or fluorescent dye to the mixture prior to its polymerization as needed. In addition, it may also be feasible to add a small amount of a bifunctional monomer other than the esters represented by the general formula (I), e.g., CR—39 in order to improve the flexibility and coloring applicability.

The thus-obtained lens-making resin according to this invention has a high refractive index, excellent processability such as superb grinding processability and outstanding impact resistance and can thus be used for eyeglass lenses, camera lenses, and other optical lenses.

Some examples of this invention will hereinafter be described, in which all designations of "part" or "parts" mean part or parts by weight and all designations of "%" mean wt.%. Incidentally, the following testing methods were employed to determine the refractive indexes, grinding processability, impact resistance and extents of yellowing upon exposure to ultraviolet rays of the lens-making resins obtained in the examples.

Refractive Indexes:

Measured at 20°C by an Abbe refractometer.

Processability:

Each molded lens blank was ground by a grinding machine designed to process eyeglass lenses. Samples bearing smooth ground surfaces were judged acceptable and marked by circles (○).

Impact Resistance:

A falling ball impact test was carried out in accordance with the FDA standards on planar plates having the thickness of 2 mm at their centers. Unbroken samples were judged as acceptable and marked by circles (○).

Ultraviolet Resistance Test:

Lens samples were placed in a Weather-O-Meter equipped with a Sunshine carbon arc-lamp. After an elapsed time of 200 hours, the lends samples were taken out of the Weather-O-Meter and their hues were compared with their hues prior to the testing in the Weather-O-Meter. Results were evaluated and marked as follows:

○ ....... Unchanged.
△ ....... Slightly yellowed.
× ....... Yellowed.

Synthesis Example 1

To a liquid mixture consisting of 34 parts of tetrachloroterephthalic acid dichloride, 34 parts of carbon tetrachloride and 3.4 parts of triethylamine, were added dropwise 15 parts of allyl alcohol. The resultant mixture was heated until carbon tetrachloride started to reflux. The mixture was maintained at the temperature for 5 hours. After allowing the reaction mixture to cool, the liquid reaction mixture was poured in a separation funnel and washed with dilute hydrochloric acid and water. The organic layer was then dried with calcium chloride and then filtered. Activated carbon was added to the filtrate and mixed therewith. The resultant mixture was filtered and the resulting filtrate was concentrated to give 28 parts of diallyl tetrachloroterephthalate as a colorless, clear semi-solid matter (hereinafter called "Compound A"). It was recrystallized from ligroin, thereby obtaining 23 parts of acicular crystals (m.p. 71—73°C).

Elementary analysis:

Calculated for $C_{14}H_{10}Cl_4O_4$: C, 43.79; H, 2.62; Cl, 36.93.
Found: C, 43.69; H, 2.53; Cl, 36.99.

Synthesis Example 2

To a liquid mixture consisting of 19.3 parts of tetrabromoterephthalic acid and 40 parts of isopropyl alcohol, were added with stirring 13 parts of a 50% aqueous solution of caustic potash. After continuously mixing the thus-obtained mixture for 30 minutes, 12.6 parts of allyl bromide and 1.0 part of triethylamine were added. The resulting mixture was heated until isopropanol started to reflux. The mixture was maintained at the temperature for 8 hours. After allowing the resulting reaction mixture to cool, the liquid reaction mixture was concentrated under reduced pressures, followed by an addition of 50 parts of chloroform to dissolve the residue. The resultant solution was poured in a separation funnel and then washed with an aqueous solution of sodium bicarbonate and thereafter with water. The organic layer was concentrated and the resultant white solid was recrystallized from ethyl acetate, thereby obtaining 12 parts of diallyl tetrabromoterephthalate (hereinafter called "Compound B") as irregular crystals (m.p. 125—127°C).

Elementary analysis:

Calculated for $C_{14}H_{10}Br_4O_4$: C, 29.90; H, 1.79; Br, 56.90.
Found: C, 29.89; H, 1.61; Br, 56.90.

Synthesis Example 3

The procedures of Synthesis Example 1 were followed except that 34 parts of tetrachlorophthalic acid dichloride were used in lieu of 34 parts of tetrachloroterephthalic acid dichloride, thereby obtaining 26 parts of diallyl tetrachlorophthalate (hereinafter called "Compound C") as a colorless, clear and viscous liquid. A portion of the liquid was recrystallized from ligroin to give columnar crystals (m.p. 71—72°C).

Elementary analysis:

Calculated for $C_{14}H_{10}Cl_4O_4$: C, 43.79; H, 2.62; Cl, 36.93.
Found: C, 43.66; H, 2.58; Cl, 36.87.

Synthesis Example 4

The procedures of Synthesis Example 1 were repeated except that 52 parts of tetrabromophthalic acid and 60 parts of chloroform were used respectively in place of 34 parts of tetrachloroterephthalic acid dichloride and 34 parts of carbon tetrachloride, thereby obtaining 48 parts of a white solid. It was recrystallized from ligroin to give 43 parts of diallyl tetrabromophthalate (hereinafter called "Compound D") as colorless columnar crystals (m.p. 110—112°C).

Elementary analysis:

Calculated for $C_{14}H_{10}Br_4O_4$: C, 29.90; H, 1.79; Br, 56.90.
Found: C, 29.85; H, 1.82; Br 56.53.

Synthesis Example 5

The procedures of Synthesis Example 2 were repeated except that 19.3 parts of tetrabromophthalic acid and 9.2 parts of methallyl chloride were employed instead of 19.3 parts of tetrabromoeterephthalic acid and 12.6 parts of allyl bromide respectively. The thus-obtained white solid was recrystallized from ligroin to obtain 10 parts of bis(β-methylallyl) tetrabromophthalate (hereinafter called "Compound E") as colorless columnar crystals (m.p. 80—82°C).

Elementary analysis:

Calculated for $C_{16}H_{14}Br_4O_4$: C, 32.58; H, 2.39; Br, 54.18.
Found: C, 32.55; H, 2.43; Br, 53.98.

Synthesis Example 6

The procedures of Synthesis Example 2 were repeated except that 13.0 parts of 2,4-dibromoterephthalic acid and 9.2 parts of methallyl chloride were used in place of 19.3 parts of tetrabromoterephthalic acid and 12.6 parts of allyl bromide respectively. After treating the thus-obtained organic layer with activated carbon, the organic layer was concentrated to give 13 parts of bis(β-methylallyl) 2,4-dibromoterephthalate (hereinafter called "Compound F") as a glassy solid.

Elementary analysis:

Calculated for $C_{16}H_{16}Br_2O_4$: C, 44.47; H, 3.73; Br, 36.99.
Found: C, 43.95; H, 3.92; Br, 37.05.

Synthesis Example 7

The procedures of Synthesis Example 2 were repeated except that 13.0 parts of 2,4-dibromoterephthalic acid and 14.1 parts of β-methylallyl bromide were respectively used instead of 19.3 parts of tetrabromoterephthalic acid and 12.6 parts of allyl bromide. The resulting organic layer was treated with activated carbon and then concentrated, thereby obtaining 13 parts of bis(β-methylallyl) 2,4-dibromoterephthalate (hereinafter called "Compound G") as a glassy solid.

Elementary analysis:

Calculated for $C_{16}H_{16}Br_2O_4$: C, 44.47; H, 3.73; Br, 36.99.
Found: C, 43.95; H, 3.92; Br, 37.05.

Synthesis Example 8

To a liquid mixture consisting of 24 parts of tetrabromoterephthalic acid and 60 parts of chloroform, were dropped with stirring 20 parts of allyl chloroacetate. Thereafter, 13 parts of triethylamine were added dropwise while cooling the resulting mixture at 15—20°C. The mixture was heated until chloroform started to reflux. At the same temperature, the mixture was maintained for 8 hours. After allowing the liquid reaction mixture to cool, it was poured in a separation funnel and washed first with dilute hydrochloric acid and then with water. The organic layer was concentrated under reduced pressures and the resulting white solid was recrystallized from ethyl acetate, thereby obtaining 25 parts of bis(allyloxycarbonylmethyl) tetrabromoterephthalate (hereinafter called "Compound H") as white irregular crystals. (m.p. 146—148°C).

Elementary analysis:

Calculated for $C_{18}H_{14}Br_4O_8$: C, 31.89; H, 2.08; Br, 47.15.
Found: C, 31.83; H, 2.12; Br, 47.08.

Synthesis Example 9

Sixty parts of allyl alcohol were dissolved in 240 parts of chloroform, followed by an addition of 105 parts of triethylamine. While stirring the resultant mixture at 10—15°C, 175 parts of o-chlorobenzoyl chloride were added dropwise over 2 hours. The resultant mixture was heated at 45—50°C for 3 hours, the liquid reaction mixture was poured in a separation funnel and washed first with dilute hydrochloric acid and then with water. The thus-formed light-yellowish organic layer was dried with calcium chloride and then treated with activated carbon. After driving chloroform off, the residue was distilled under reduced pressures to obtain 153 parts of allyl o-chlorobenzoate (hereinafter called "Compound a"; b.p. 101°C/4,6 mbar (3.5 mmHg).

Elementary analysis:

Calculated for $C_{10}H_9O_2Cl$: C, 61.10; H, 4.61; Cl, 18.03.
Found: C, 61.18; H, 4.60; Cl, 17.82.

Synthesis Example 10—18

Following the procedures of Synthesis Example 9, were synthetically prepared the unifunctional monomers given in Table 1. However, a nucleus-halogenated phenol and allyl chloroformate or 2-methylallyl chloroformate were used in each of Synthesis Examples 14—18.

TABLE 1

| Synthesis Example | Structural Formula | Compound Symbol | Boiling Point °C/mbar (mmHg) | Elementary Analysis Data | | |
|---|---|---|---|---|---|---|
| | | | | C | H | Halogen |
| 10 | 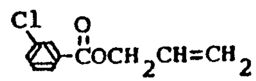 | b | 99/4,6 (3.5) | 61.15 (61.10) | 4.59 (4.61) | 17.93 (18.03) |
| 11 | 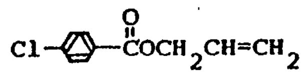 | c | 98/4,6 (3.5) | 61.21 (61.10) | 4.59 (4.61) | 17.88 (18.03) |
| 12 | 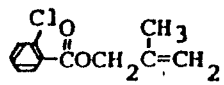 | d | 97/4,6 (3.5) | 62.75 (62.72) | 5.17 (5.26) | 16.56 (16.83) |
| 13 | 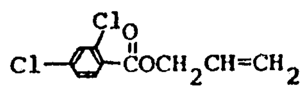 | e | 135/9,3 (7.0) | 51.77 (51.98) | 3.51 (3.49) | 30.59 (30.68) |
| 14 | 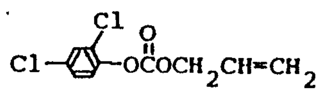 | f | 123/4,0 (3.0) | 48.53 (48.61) | 3.19 (3.26) | 28.73 (28.70) |
| 15 | 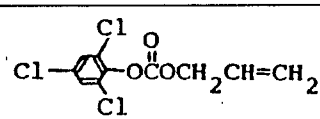 | g | 126/4,0 (3.0) | 42.37 (42.66) | 2.61 (2.50) | 37.23 (37.78) |
| 16 | 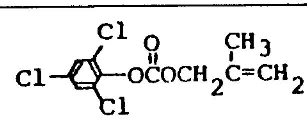 | h | 126/4,0 (3.0) | 44.65 (44.70) | 3.10 (3.07) | 35.73 (35.99) |
| 17 | 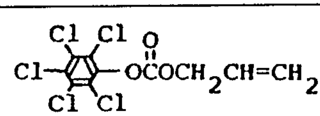 | i | 166/4,0 (3.0) | 34.52 (34.28) | 1.29 (1.44) | 49.87 (50.59) |
| 18 | 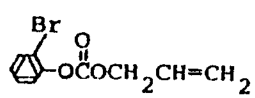 | j | 122/4,0 (3.0) | 46.28 (46.72) | 3.53 (3.53) | 31.00 (31.08) |

Note: Figures in brackets ( ) are values calculated.

Example 1

A liquid mixture, which had been obtained by heating 50 parts of diallyl tetrachlorophthalate (Compound A), 50 parts of allyl o-chlorobenzoate (Compound b) and 0.1 part of 2(2'-hydroxy-5'-methylphenyl)benzotriazole to 75°C, was maintained at 60°C, followed by an addition of 0.3 part of benzoyl peroxide. The thus-prepared mixture was poured into a mold which was formed of a glass mold and a polyethylene gasket and preheated to 60°C in advance. It was held at 60°C for 24 hours, at 80°C for 2 hours and at 100°C for 2 hours to carry out the copolymerization of the contents. The thus-formed resin was next taken out of the mold, on which a refractivity measurement, processability test, impact resistance test and ultraviolet resistance test were conducted. As results of such a measurement and tests, it was found that the thus-obtained colorless transparent lens had the refractive index of 1.597 and good grinding processability, impact resistance and ultraviolet ray resistance.

Examples 2—29

In the same manner as in Example 1, monomers were copolymerized at different proportions to prepare lenses. Results are shown in Table 2, together with results of Comparative Examples 1—5.

TABLE 2

| Example | Compositions of Polymers | (parts) | Refractive Index $n_d^{20}$ | Grinding Processability | Impact Resistance | Ultraviolet Resistance Test |
|---|---|---|---|---|---|---|
| 1 | A/b | (50/50) | 1.594 | ○ | ○ | ○ |
| 2 | A/PhMA | (50/50) | 1.583 | ○ | ○ | ○ |
| 3 | A/p-BrPhMA | 40/60) | 1.604 | ○ | ○ | ○ |
| 4 | A/o-ClSt | (70/30) | 1.600 | ○ | ○ | ○ |
| 5 | B/f | (30/70) | 1.584 | ○ | ○ | ○ |
| 6 | B/PhMA | (50/50) | 1.591 | ○ | ○ | ○ |
| 7 | B/o-ClBMA | (40/60) | 1.594 | ○ | ○ | ○ |
| 8 | B/o-ClSt | (70/30) | 1.606 | ○ | ○ | ○ |
| 9 | B/h | (50/50) | 1.587 | ○ | ○ | ○ |
| 10 | B/i | (50/50) | 1.603 | ○ | ○ | ○ |
| 11 | C/a | (50/50) | 1.597 | ○ | ○ | ○ |
| 12 | C/PhMA | (50/50) | 1.585 | ○ | ○ | ○ |
| 13 | C/o-ClBMA | (40/60) | 1.590 | ○ | ○ | ○ |
| 14 | C/d | (50/50) | 1.586 | ○ | ○ | ○ |
| 15 | C/g | (50/50) | 1.588 | ○ | ○ | ○ |
| 16 | D/c | (30/70) | 1.598 | ○ | ○ | ○ |
| 17 | D/j | (30/70) | 1.586 | ○ | ○ | ○ |
| 18 | E/a | (50/50) | 1.612 | ○ | ○ | ○ |
| 19 | E/PhMA | (50/50) | 1.600 | ○ | ○ | ○ |
| 20 | E/St | (70/30) | 1.617 | ○ | ○ | ○ |

TABLE 2 Continued

| Example | Compositions of Polymers | (parts) | Refractive Index $n^{20}_d$ | Grinding Processability | Impact Resistance | Ultraviolet Resistance Test |
|---|---|---|---|---|---|---|
| 21 | F/e | (30/70) | 1.593 | ○ | ○ | ○ |
| 22 | F/o-ClBMA | (40/60) | 1.592 | ○ | ○ | ○ |
| 23 | G/h | (50/50) | 1.578 | ○ | ○ | ○ |
| 24 | G/p-BrPhMA | (40/60) | 1.598 | ○ | ○ | ○ |
| 25 | H/j | (30/70) | 1.579 | ○ | ○ | ○ |
| 26 | H/jPhMA | (50/50) | 1.573 | ○ | ○ | ○ |
| 27 | A/b/CR—39 | (60/35/5) | 1.590 | ○ | ○ | ○ |
| 28 | C/a/CR—39 | (60/35/5) | 1.593 | ○ | ○ | ○ |
| 29 | E/a/CR—39 | (60/35/5) | 1.610 | ○ | ○ | ○ |

TABLE 2 Continued

| Comparative Example | Compositions of Polymers | (parts) | Refractive Index $n^{20}_d$ | Grinding Processability | Impact Resistance | Ultraviolet Resistance Test |
|---|---|---|---|---|---|---|
| 1 | CR—39 | (100) | 1.498 | ○ | ○ | ○ |
| 2 | CR—39/PhMA | (50/50) | 1.532 | ○ | ○ | ○ |
| 3 | PAP/PhMA | (50/50) | 1.536 | ○ | ○ | ○ |
| 4 | CR—39/o-ClSt | (70/30) | 1.533 | × | ○ | △ |
| 5 | DAP/BrSt | (70/30) | 1.544 | × | × | △ |

Note: PhMA Phenylmethacrylate.
o-ClBMA o-Chlorobenzylmethacrylate.
p-BrPhMA p-Bromophenylmethacrylate.
Br-St Bromostyrene (o-isomer: 70 wt.%; p-isomer: 30 wt.%).
o-ClSt o-Chlorostyrene.
DAP Diallyl phthalate.
St Styrene.

Referential Example 1

In order to compare the miscibility between a bifunctional monomer useful in the practice of this invention and various unifunctional monomers, diallyl tetrachloroterephthalate was chosen as the bifunctional monomer. Diallyl tetrachloroterephthalate and each of various unifunctional monomers were mixed at the weight ratio of 2:1 and heated into the state of a perfect solution. Thereafter, the resultant mixture was retained for 2 hours in a constant temperature bath maintained at 60°C. Each sample was observed whether any crystals were allowed to precipitate or not.

Results are shown in Table 3.

TABLE 3

| Unifunctional Monomer | Crystals |
|---|---|
| Compound a | Not precipitated |
| Compound e | Not precipitated |
| Compound f | Not precipitated |
| Compound g | Not precipitated |
| Compound i | Not precipitated |
| Compound j | Not precipitated |
| Phenylacrylate | Precipitated |
| Styrene | Precipitated |

## Claims

1. A resin for high-refractivity lenses, formed by copolymerizing by heating, in the presence of a radical polymerization initiator and optionally of one or more appropriate usual additives such as ultraviolet stabilizer antioxidant, coloring inhibitor or fluoroescent dye, a mixture of 10—80 wt.% of at least one nucleus-halogenated benzene dicarboxylate represented by the following general formula (I):

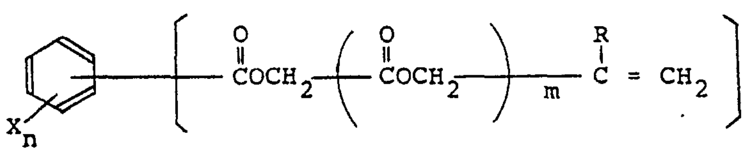

(I)

wherein X means a chlorine or bromine atom, *n* is 2 or 4, *m* stands for 0 or 1 and R denotes a hydrogen atom or a methyl group and 20—90 wt.% of at least one unifunctional monomer having a refractive index of at least 1.55 as a homopolymer, capable of undergoing a radical polymerization and represented by the following general formula (III):

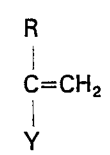

(III)

wherein R means a hydrogen atom or a methyl group and Y denotes

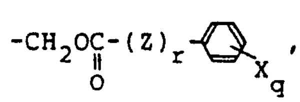 , 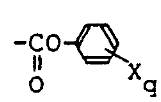 , 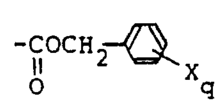 or 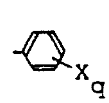

in which X means a chlorine or bromine atom, Z is an oxygen or sulfur atom, *q* stands for an integer of 0—5, and *r* stands for 0 or 1.

2. A resin according to claim 1, wherein the unifunctional monomer is a monomer represented by the following general formula (IV):

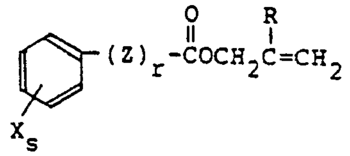

(IV)

in which R means a hydrogen atom or a methyl group, X denotes a chlorine or bromine atom, Z is an oxygen or sulfur atom, *r* is 0 or 1 and *s* stands for an integer of 1—5.

3. A high-refractivity lens made of a resin according to claim 1 or 2.

**Patentansprüche**

1. Harz für Linsen mit hohem Lichtbrechungsvermögen, gebildet durch Hitzecopolymerisation eines Gemisches aus 10 bis 80 Gewichtsprozent mindestens eines am Kern halogenierten Benzoldicarboxylats der allgemeinen Formel I

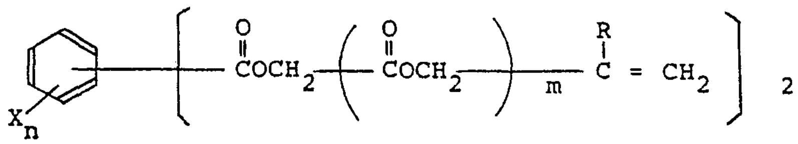

(I)

in der X ein Chlor- oder Bromatom bedeutet, n den Wert 2 oder 4 hat, m den Wert 0 oder 1 aufweist und R ein Wasserstoffatom oder eine Methylgruppe darstellt, und 20 bis 90 Gewichtsprozent mindestens eines einwertigen Monomeren mit einem Brechungsindex von mindestens 1,55 als Homopolymeren, welches einer Radikalpolymerisation unterworfen werden kann und durch die folgende allgemeine Formel III dargestellt ist:

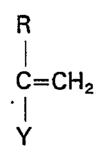

(III)

in der R ein Wasserstoffatom oder eine Methylgruppe bedeutet und Y die Reste

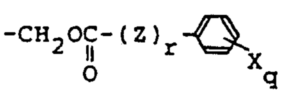, 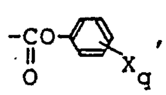, 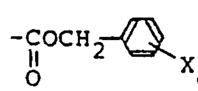 oder 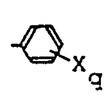

darstellt, in denen x ein Chlor- oder Bromatom bedeutet, Z ein Sauerstoff- oder Schwefelatom ist, q eine ganze Zahl von 0 bis 5 bedeutet und r den Wert 0 oder 1 hat, in gegenwart eines Radikalpolymerisationsinitiators und gegebenenfalls eines oder mehrerer geeigneter üblicher Zusätze, wie UV-Stabilisator, Antioxidans, Verfärbungshemmer oder Fluoreszenzfarbstoff.

2. Harz nach Anspruch 1, in dem das einwertige Monomer ein Monomer der allgemeinen Formel IV ist:

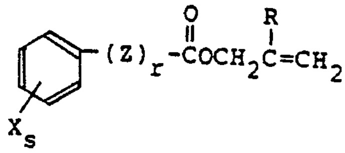

(IV)

in der R ein Wasserstoffatom oder eine Methylgruppe bedeutet, X ein Chlor- oder Bromatom darstellt, Z ein Sauerstoff- oder Schwefelatom ist, *r* den Wert 0 oder 1 hat und s eine ganze Zahl im Wert von 1 bis 5 ist.

3. Linse mit hohem Lichtbrechungsvermögen aus einem Harz nach Anspruch 1 oder 2.

**Revendications**

1. Une résine pour lentilles très réfringentes formée par copolymérisation par chauffage en présence d'un amorceur de polymérisation radicalaire et éventuellement d'un ou plusieurs additifs courants appropriés tels qu'un stabilisant vis-à-vis des ultraviolets, un antioxydant, un inhibiteur de coloration ou un colorant fluorescent d'un mélange de 10—80% en poids d'au moins un benzènedicarboxylate halogéné sur le noyau représenté par la formule générale (I) suivante:

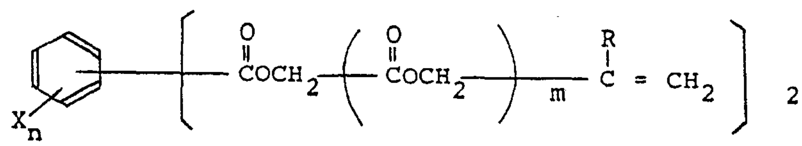

(I)

dans laquelle X représente un atome de chlore ou de brome, n est 2 ou 4, m est 0 ou 1 et R représente un atome d'hydrogène ou un groupe méthyle et 20 à 90% en poids d'au moins un monomère monofonctionnel ayant un indice de réfraction d'au moins 1,55 comme homopolymère, capable de subir une polymérisation radicalaire et représenté par la formule générale (III) suivante:

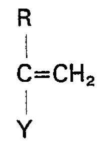

(III)

dans laquelle R représente un atome d'hydrogène ou un groupe méthyle et Y représente

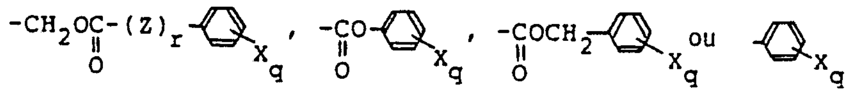

, , ou

où X est un atome de chlore ou de brome, Z est un atome d'xygène ou de soufre, q est un entier de 0 à 5 et r est 0 ou 1.

2. Une résine selon la revendication 1 dans laquelle le monomère monofonctionnel est un monomère représenté par la formule générale (IV) suivante:

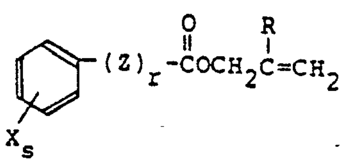

(IV)

dans laquelle R représente un atome d'hydrogène ou un groupe méthyle, X représente un atome de chlore ou de brome, Z est un atome d'oxygène ou de soufre, r est 0 ou 1 et s est un entier de 1 à 5.

3. Une lentille très réfringente faite d'une résine selon la revendication 1 ou 2.